# EUROPEAN PATENT SPECIFICATION

(11) **EP 0 337 621 B1**
(45) Date of publication and mention of the grant of the patent: **23.06.1993**
(21) Application number: 89302875.3
(22) Date of filing: 22.03.1989
(51) Int. Cl.: A23B 7/00, A23B 7/02, A23B 7/08, A23B 7/148

(54) **Process for the production of fruit products**
Verfahren zur Herstellung von Fruchtprodukten
Procédé pour la production de produits de fruit

(30) Priority: 22.03.1988 NZ 223971
(43) Date of publication of application: 18.10.1989
(73) Proprietor: THE HORTICULTURE AND FOOD RESEARCH INSTITUTE OF NEW ZEALAND LIMITED, Palmerston North 5331 (NZ)
(72) Inventor: Perera, Conrad Ostwald, Mt. Albert, Auckland (NZ); Venning, Jennifer Ann, Mt. Eden, Auckland (NZ)
(74) Representative: Gore, Peter Manson

(56) References cited:
- DE-A- 2 712 560
- US-A- 3 962 355
- PATENT ABSTRACTS OF JAPAN, vol. 10, no. 103 (C-340)(2160) 18 April 1986 & JP-A-60232049

## Description

This invention relates to a method of producing a dried chlorophyll containing fruit product in which certain physical, chemical and/or sensory features such as, for example, taste and colour are substantially stabilised. The invention is intended particularly though not necessarily solely for use in relation to green chlorophyll-containing fruit, especially kiwifruit.

It has now been found possible to provide a method of producing a dried chlorophyll containing fruit product having extended stability of certain physical, chemical, and/or sensory characteristics and/or a dried chlorophyll containing fruit product having extended stability of certain physical, chemical, and/or sensory characteristics which will at least provide the public with a useful choice.

In US-A- 3 962 355 there is disclosed a method for producing a snack food from fruit, particularly apples, which comprises, after washing, paring and if necessary coring the fruit, cutting the fruit into pieces, if necessary in activating oxidase contained therein by chemical treatment, but more particularly soaking the pieces in sugar syrup followed by draining excess syrup from the pieces and drying the drained pieces to a moisture content of 6% to 8% while in contact with hot air, followed by frying the dried pieces particularly at a reduced pressure of 0 to 80 kPa (0 to 600 mn Hg), and cooling the fried pieces particularly at said reduced pressure until they harden. Thereby colour stability of the fruit is stated to be achieved by stopping the browning of the dried fruit.

Colour stability is also disclosed to be achieved by stopping the browning of dried fruit slices, especially apple slices in DE-A- 2 712 560 by a process characterised by washing the fruit, removing the core and slicing, then dipping into an aqueous solution suitable for foodstuffs to protect against browning reactions, then freeze drying and finally packing in air- and water-tight form under an inert atmosphere.

According to the present invention there is provided a method of producing a dried chlorophyll containing fruit product in which certain physical, chemical and/or sensory features are stabilised, comprising the steps of:
infusing pieces of the fruit with an infusion solution containing a carbohydrate selected from monosaccharides, disaccharides, oligosaccharides, and mixture thereof, and a buffering salt;
and drying the infused fruit pieces at a temperature not higher than 50°C.

The physical, chemical and/or sensory features of the fruit preferably include one or more of green colour, flavour and Vitamin C content.

The present invention also provides a method of producing a green dried product from green-fleshed fruit, the method involving the step of preventing degradation of chlorophyll pigments in the fruit during the drying process by infusing the fruit with a carbohydrate solution selected from monosaccharides, disaccharides, oligosaccharides, and mixture thereof, containing a buffering agent prior to drying the fruit at a temperature not higher than 50°C.

The physical, chemical and/or sensory features of the fruit may include one or more of green colour, flavour and Vitamin C content.

The method may include further steps of peeling and slicing the fruit prior to the infusion step. The fruit is usually sliced to a predetermined thickness, preferably between substantially 5 and substantially 11mm.

The carbohydrate may be in the form of an aqueous infusion solution, usually comprising between substantially 10% and substantially 70% carbohydrate by weight. The carbohydrate may be selected from one or more of glucose, fructose and sucrose. It preferably comprises a mixture of glucose and fructose, especially invert sugar.

The buffering salt may be a salt of citric acid, for example sodium citrate or potassium citrate. The drying step may comprise a first drying step whereby the fruit pieces are dried to a moisture content of between substantially 2% and substantially 4% by weight. This first drying step may be achieved by vacuum drying. It may however comprise an air drying step followed by a vacuum drying step. Such air drying step may comprise air drying the pieces to a minimum moisture content of about 40% by weight. The drying step is preferably carried out at a temperature between 40° and 50°C. there may be a further drying step whereby the residual moisture content of the fruit pieces is substantially removed.

The method of the present invention may include an additional step of packaging the infused and dried product in an oxygen, water vapour, and ultra-violet light impermeable medium.

The method of the present invention may, for example, be applied to a chlorophyll-containing green fruit, especially kiwifruit.

It will now be described a method of producing a dried chlorophyll containing fruit product in which certain physical, chemical and/or sensory features such as taste and colour are stabilised.

Pieces of the fruit to be processed are cut to a suitable size, which may be adjusted according to the rate of infusion desired in a particular case, as obviously infusion will take place more rapidly into pieces of small volume and large surface area than the reverse. It is preferable that all of the pieces to be infused at one time be of a similar thickness, for example 5-6mm slices or 10-11mm slices.

The cut pieces are then infused with a carbohydrate to a predetermined extent. In the preferred form, this is carried out by vacuum infusion of the fruit pieces in an aqueous solution of a carbohydrate preferably comprising between about 10% and about 70% carbohydrate by weight. We have obtained good results using a 50% carbohydrate solution by weight. The choice of carbohydrate is quite broad, and we have obtained good results with a mixture of glucose and fructose and especially with invert sugar. However, it is envisaged that many other forms of carbohydrate such as, for example, sucrose, and mixtures of sucrose with fructose, glucose, or both, could be used within the scope of the invention.

The length of time for infusion to take place will obviously be adjusted by one skilled in the art according to the volume: surface ratio of the pieces of fruit, the exact concentration of the carbohydrate infusion solution, and the extent of infusion desired for a particular fruit. It is necessary to ensure that the degree of infusion is sufficient to give the required stabilising effect, but without making the fruit too sweet to the taste. Using a 50% sugar solution, with 5 to 6mm thick slices of fruit, we have found that an infusion period of 15 to 20 minutes produces a good result.

By way of example, ripe kiwifruit generally has a pH of about 3.2 to 3.3 and a titratable acidity of about 1 .2%. This can give rise to an acidic flavour in the final finished product. We have found that the acidic flavour can be reduced considerably by incorporating a buffering salt in the carbohydrate solution which buffers the acidity in the fruit at about pH 4.5. This can reduce the harshness of the perceived acidity and improve the flavour of the finished product. We have found that the presence of the buffering salt also increases the stability of the chlorophyll pigments. A suitable buffering salt for this purpose is a salt of citric acid, most preferably sodium or potassium citrate used in low concentrations.

After the fruit pieces have been infused with the carbohydrate to a predetermined extent appropriate to the fruit, the infused fruit pieces are dried to a predetermined extent.

It has been found that a good shelf life is obtained with the product by drying the fruit pieces to a moisture content of between about 2% and about 4% by weight.

The infused fruit pieces are preferably vacuum dried, preferably at about 40°-50°C until the moisture content is between about 2% and 4% by weight.

The drying step may alternatively be carried out in two steps, the first being an air drying step which is carried out at an elevated temperature, preferably between about 40° and about 50°C, until the pieces of fruit have a minimum moisture content of about 40% and most preferably have a moisture content of about 45%. At the temperature given, this has been found to take about 4 hours. The air dried fruit pieces are then further dried under vacuum, preferably at about 40°-50°C until the final moisture content is between about 2% and 4%. The residual moisture content is removed by storing the vacuum dried material over a suitable dessicant in a sealed container for a period of 1-2 weeks. This residual drying process can be enhanced by passing air through the dessicator in a closed loop. The moisture content of the fruit pieces is reduced by this method to about zero.

For extended shelf life the dried product is then packaged in an oxygen, water vapour and UV light impermeable medium. In order to protect the product from oxygen degradation, the packaging may be vacuum packed, or nitrogen flushed, or packed with an oxygen scavenger, such as will be known to those skilled in the art.

It has been found that this method in accordance with the invention is particularly suitable for producing a dried kiwifruit product having stabilised colour, flavour and Vitamin C content over an extended shelf life, but it is envisaged that it could also be applied to other fruit particularly other chlorophyll-containing green fruit, such as kiwano.

After the infusion and drying steps of the present invention, the infused dried fruit pieces may then be packed under vacuum or nitrogen flush or with an oxygen scavenger in an oxygen, water vapour, and ultra-violet light impermeable packaging medium such as will be known to those skilled in the art. It would also be possible to pack the fruit pieces in transparent packs having shelf appeal, but for long term storage these would preferably themselves be retained in an ultra-violet light impermeable package.

The green colour of many green fruit, such as kiwifruit, is due to the presence of a group of natural pigments known as chlorophylls. They are magnesium chelated tetrapyrroles each having a propionate esterified with phytol alcohol at position 7 in the ring structure. In green plant material, chlorophylls are known to occur within the plastid bodies known as chloroplasts. Chlorophylls are insoluble in water but soluble in organic solvents such as alcohol, ether, benzene and acetone.

Chlorophyll pigments are generally susceptible to degradation due to the action of certain enzymes as well as to heat, light and acid. It is known that during the drying of green fruit and vegetables the chlorophyll pigments are converted to brown pheophytins by the replacement of the magnesium ion with hydrogen. This conversion is brought about by organic acids that are released when cells are ruptured as well as those that are formed during heating. It is also known that lipid degrading enzymes such as, for example lipase, lipoxygenase and linoleate hydroperoxide isomerase have a bleaching effect on chlorophylls. Dehydrated products in clear packaging may undergo photo-oxidation and subsequent loss of green colours.

In dried kiwifruit in particular the chlorophyll pigments are degraded quite rapidly during the drying process and subsequent storage. The temperature of drying is very critical with chlorophyll conversion to brown pheophytin taking place above 50°C, depending on the time of drying and relative humidity of the air. Usually dried kiwifruit is olive green to brown in colour and turns to dark brown on storage within a few weeks. This change in colour is usually accompanied by the development of unpleasant odours and flavours.

It is an advantage of the method of the present invention that a dried fruit product may be provided which has enhanced stability of certain physical chemical and/or sensory features, in particular flavour, colour and Vitamin C content and an extended shelf life. It is advantageous to produce a green dried fruit product from green-fleshed fruit which can be stored for extended periods, and which may be used in, for example, cereals containing mixed dried fruits, baking, and confectionery products. The product obtainable according to the present invention in at least the preferred form has a shelf life of up to nine months or more under suitable packaging, retaining good flavour, colour and Vitamin C characteristics over this time. In at least the preferred form the product obtainable according to the invention has palatable sweetness and reduced tartness, and is also of a desirable texture following the drying sequence described herein. Thus it can be seen that the invention provides a method of producing a dried chlorophyll containing fruit product in which certain physical, chemical and/or sensory features are stabilised and/or a method of stabilising colour in fruit containing chlorophyll during drying, which is advantageous, uses biologically acceptable, naturally occuring treatment ingredients, and which can be readily applied to produce a useful, palatable product.

The present invention will now be further described with particular reference to the following Example.

### Example

A quantity of kiwifruit is peeled, and sliced to give slices of about 5 to 6 mm in thickness. An infusion solution is also prepared comprising an aqueous solution of invert sugar containing 50% sugar by weight and 1% sodium or potassium citrate.

500 grams of the peeled sliced kiwifruit is then placed in a container and 500 grams of the prepared infusion solution is added and it is ensured that all fruit pieces are completely immersed in this solution. The fruit in the infusion solution is then vacuum infused for 15 to 20 minutes.

The air dried fruit pieces are then transferred to a vacuum drier and vacuum dried at about 40°-50°C until a final moisture content of 2% to 4% by weight is reached.

Alternatively, the infused pieces are first transferred onto mesh trays and air dried at 40° to 50°C until a moisture content of about 45% by weight is reached (approximately 4 hours at 40° to 50°C), and then vacuum dried at 40-50°C to a 2%-4% moisture content by weight. The residual moisture content of the vacuum dried kiwifruit slices was removed by storing over silica gel in a dessicator for a period of 1-2 weeks to give a final moisture content of about zero.

## Claims

1. A method of producing a dried chlorophyll containing fruit product in which certain physical, chemical and/or sensory features are stabilised, comprising the steps of:
infusing pieces of the fruit with an infusion solution containing a carbohydrate selected from monosaccharides, disaccharides, oligosaccharides, and mixture thereof, and a buffering salt;
and drying the infused fruit pieces at a temperature not higher than 50°C.

2. A method according to claim 1, wherein the physical, chemical and/or sensory features of the fruit include one or more of green colour, flavour and Vitamin C content.

3. A method according to claim 1 or 2, wherein the fruit is kiwifruit.

4. A method according to any of claims 1 to 3, wherein the buffering salt is a salt of citric acid.

5. A method according to claim 4, wherein the buffering salt is sodium citrate or potassium citrate.

6. A method according to any of claims 1 to 5, wherein the drying step is carried out at a temperature between 40° and 50°C.

7. A method according to any of claims 1 to 6, including the further steps of peeling and slicing the fruit prior to the infusion step.

8. A method according to claim 3, wherein the fruit is sliced to a thickness between substantially 5 and substantially 11mm.

9. A method according to any of claims 1 to 8, wherein the aqueous infusion solution comprises between substantially 10% and substantially 70% carbohydrate by weight.

10. A method according to any of claims 1 to 9, wherein the carbohydrate is selected from one or more of glucose, fructose and sucrose.

11. A method according to claim 10, wherein the carbohydrate comprises a mixture of glucose and fructose.

12. A method according to claim 11, wherein the carbohydrate substantially comprises invert sugar.

13. A method according to any of claims 1 to 12, wherein the drying step comprises a first drying step whereby the fruit pieces are dried to a moisture content of between substantially 2% and substantially 4% by weight.

14. A method according to any of claims 1 to 13 wherein the first drying step is achieved by vacuum drying.

15. A method according to any of claims 1 to 13, wherein the first drying step comprises an air drying step followed by a vacuum drying step.

16. A method according to claim 14 or 15, wherein the air drying step comprises air drying the pieces to a minimum moisture content of about 40% by weight.

17. A method according to any of claims 13 to 16, including a further drying step whereby the residual moisture content of the fruit pieces is substantially removed.

18. A method according to any of claims 1 to 17, including the additional step of packaging the infused and dried product in an oxygen, water vapour, and ultra-violet light impermeable medium.

19. A method of producing a green dried product from green-fleshed fruit, the method involving the step of preventing degradation of chlorophyll pigments in the fruit during the drying process by infusing the fruit with a carbohydrate solution selected from monosaccharides, disaccharides, oligosaccharides, and mixture thereof containing a buffering agent prior to drying the fruit at a temperature not higher than 50°C.

## Patentansprüche

1. Ein Verfahren zur Herstellung eines getrockneten, Chlorophyll enthaltenden Fruchtproduktes, bei welchem gewisse physikalische, chemische und/oder sensorische Merkmale stabilisiert werden, wobei das Verfahren folgende Schritte umfaßt:
Infundieren von Stücken der Frucht mit einer Infusionslosung, welche ein aus Monosacchariden, Disacchariden, Oligosacchariden und Mischungen daraus ausgewähltes Kohlehydrat und ein Puffersalz aufweist;
und Trocknen der so infundierten Fruchtstücke bei einer Temperatur, die nicht höher als 50° C ist.

2. Ein Verfahren gemäß Anspruch 1, bei welchem die physikalischen, chemischen und/oder sensorischen Merkmale der Frucht wenigstens ein Merkmal aus der Merkmalsgruppe grüne Farbe, Geschmack und Vitamin-C-Gehalt umfassen.

3. Ein Verfahren gemäß Anspruch 1 oder 2, bei welchem die Frucht eine Kiwifrucht ist.

4. Ein Verfahren gemäß einem der Ansprüche 1 - 3, bei welchem das Puffersalz ein Salz der Zitronensäure ist.

5. Ein Verfahren gemäß Anspruch 4, bei welchem das Puffersalz Natriumzitrat oder Kaliumzitrat ist.

6. Ein Verfahren gemäß einem der Ansprüche 1 - 5, bei welchem der Trocknungsschritt bei einer Temperatur zwischen 40° C und 50° C ausgeführt wird.

7. Ein Verfahren gemäß einem der Ansprüche 1 - 6, das die weiteren Schritte des Schälens und Schneidens der Frucht vor dem Infusionsschritt umfaßt.

8. Ein Verfahren gemäß Anspruch 3, bei welchem die Frucht in Stücke geschnitten wird, die zwischen im wesentlichen 5 und im wesentlichen 11 mm dick sind.

9. Ein Verfahren gemäß einem der Ansprüche 1 - 8, bei welchem die wässrige Infusionslösung zwischen im wesentlichen 10 Gew.-% und im wesentlichen 70 Gew.-% Kohlehydrat enthält.

10. Ein verfahren gemäß einem der Ansprüche 1 - 9, bei welchem das Kohlehydrat aus wenigstens einer Substanz der Glukose, Fruktose und Saccharose umfassenden Gruppe ausgewählt wird.

11. Ein Verfahren gemäß Anspruch 10, bei welchem das Kohlehydrat eine Mischung aus Glukose und Fruktose umfaßt.

12. Ein Verfahren gemäß Anspruch 11, bei welchem das Kohlehydrat im wesentlichen Invertzucker umfaßt.

13. Ein verfahren gemäß einem der Ansprüche 1 - 12, bei welchem der Trocknungsschritt einen ersten Trocknungsschritt umfaßt, in welchem die Fruchtstücke auf einen Feuchtigkeitsgehalt von zwischen im wesentlichen 2 Gew.-% und im wesentlichen 4 Gew.-% getrocknet werden.

14. Ein Verfahren gemaß einem der Ansprüche 1 - 13, bei welchem der erste Trocknungsschritt mittels Vakuumtrocknen durchgeführt wird.

15. Ein Verfahren gemäß einem der Ansprüche 1 - 13, bei welchem der erste Trocknungsschritt einen Lufttrocknungsschritt umfaßt, dem ein Vakuumtrocknungsschritt folgt.

16. Ein Verfahren gemäß Anspruch 14 oder 15, bei welchem der Lufttrocknungsschritt das Lufttrocknen der Stücke auf einen Mindestfeuchtigkeitsgehalt von etwa 40 Gew.-% umfaßt.

17. Ein Verfahren gemäß einem der Ansprüche 13 - 16, das einen weiteren Trocknungsschritt aufweist, durch den der restliche Feuchtigkeitsgehalt der Fruchtstücke im wesentlichen entfernt wird.

18. Ein Verfahren gemäß einem der Ansprüche 1 - 17, das den zusätzlichen Schritt des Verpackens des infundierten und getrockneten Produktes in ein für Sauerstoff, Wasserdampf und ultraviolettes Licht undurchlässiges Medium umfaßt.

19. Ein Verfahren zur Herstellung eines grünen getrockneten Produktes aus einer Frucht mit grünem Fruchtfleisch, bei welchem das Verfahren den Schritt des Verhinderns des Abbaus von Chlorophyll-Pigmenten in der Frucht während des Trocknungsprozesses umfaßt, indem die Frucht vor der Trocknung bei einer Temperatur von höchstens 50° C mit einer aus Monosacchariden, Disacchariden, Oligosacchariden und Mischungen daraus ausgewählten Kohlehydratlösung behandelt wird, die eine Puffersubstanz enthält.

## Revendications

1. Procédé de production d'un produit fruitier à chlorophylle dans lequel certaines caractéristiques physiques, chimiques et/ou sensorielles, selon lequel on infuse des morceaux du fruit avec une solution d'infusion contenant un hydrate de carbone choisi parmi les monosaccharides, disaccharides, oligosaccharides et mélange de ceux-ci et un sel tampon ; et on sèche les morceaux de fruit infusés à une température non supérieure à 50 degrés C.

2. Procédé selon la revendication 1, dans lequel les caractéristiques physiques, chimiques et/ou sensorielles du fruit comprennent une ou plus de couleur verte, saveur et teneur en vitamine C.

3. Procédé selon la revendication 1 ou 2 dans lequel le fruit est le kiwi.

4. Procédé selon l'une des revendications 1 à 3 dans lequel le sel tampon est un sel d'acide citrique.

5. Procédé selon la revendication 4 dans lequel le sel tampon est le citrate de sodium ou de potassium.

6. Procédé selon l'une des revendications 1 à 5, dans lequel le séchage est effectué à une température comprise entre 40 degrés et 50 degrés C.

7. Procédé selon l'une des revendications 1 à 6, dans lequel en outre on pèle et on découpe le fruit avec l'infusion.

8. Procédé selon la revendication 3, dans lequel on découpe le fruit à une épaisseur comprise entre sensiblement 5 et sensiblement 11 mm.

9. Procédé selon l'une des revendications 1 à 8 dans lequel la solution d'infusion aqueuse comprend entre sensiblement 10 % et sensiblement 70 % en poids d'hydrate de carbone.

10. Procédé selon l'une des revendications 1 à 9, dans lequel l'hydrate de carbone est choisi parmi l'un ou plus d'un des glucose, fructose et sucrose.

11. Procédé selon la revendication 10, dans lequel l'hydrate de carbone comprend un mélange de glucose et fructose.

12. Procédé selon la revendication 11, dans lequel l'hydrate de carbone comprend essentiellement du sucre inverti.

13. Procédé selon l'une des revendications 1 à 12, dans lequel l'opération de séchage comprend un premier séchage par lequel les morceaux de fruit sont séchés jusqu'à une teneur en humidité comprise entre sensiblement 2 % et 4 % en poids.

14. Procédé selon l'une des revendications 1 à 13 dans lequel le premier séchage est effectué sous vide.

15. Procédé selon l'une des revendications 1 à 13, dans lequel le premier séchage comprend un séchage à l'air suivi d'un séchage sous vide.

16. Procédé selon l'une des revendications 14 ou 15, dans lequel le séchage à l'air comprend le séchage à l'air des morceaux jusqu'à une teneur minimale en humidité d'environ 40 % en poids.

17. Procédé selon l'une des revendications 13 à 16 qui comprend un autre séchage par lequel la teneur en humidité résiduelle des morceaux de fruit est sensiblement éliminée.

18. Procédé selon l'une des revendications 1 à 17 comprenant une opération additionnelle d'emballage du produit infusé et séché dans un milieu imperméable à l'oxygène, à la vapeur d'eau et à la lumière ultraviolet.

19. Procédé de production d'un produit vert séché à partir de fruit à chair verte dans lequel on empêche la dégradation des pigments de chlorophylle dans le fruit pendant le séchage en infusant le fruit avec une solution d'hydrate de carbone choisie parmi les monosaccharides, disaccharides, oligosaccharides et mélange de ceux-ci, contenant un agent tampon avant de sécher le fruit à une température non supérieur à 50 degrés C.
